# EUROPÄISCHE PATENTSCHRIFT

(11) **EP 2 401 179 B1**
(45) Veröffentlichungstag und Bekanntmachung des Hinweises auf die Patenterteilung: **11.12.2013**
(21) Anmeldenummer: 10705980.0
(22) Anmeldetag: 23.02.2010
(51) Int. Cl.: B60R 13/02, B60R 13/04

(54) **VORRICHTUNG MIT EINEM KUNSTSTOFFFORMTEIL UND EINEM DECKEL**
DEVICE HAVING A PLASTIC MOLDED PART AND A COVER
DISPOSITIF COMPRENANT UNE PIÈCE MOULÉE EN PLASTIQUE ET UN COUVERCLE

(30) Priorität: 27.02.2009 DE 202009002796 U
(43) Veröffentlichungstag der Anmeldung: 04.01.2012
(73) Patentinhaber: Rehau AG & Co, 95111 Rehau (DE)
(72) Erfinder: MÜLLER, Gerhard, 95100 Selb (DE)
(86) Internationale Anmeldenummer: PCT/EP2010/001102
(87) Internationale Veröffentlichungsnummer: WO 2010/097193

(56) Entgegenhaltungen:
- EP-A1- 1 067 025
- EP-A1- 1 512 582
- DE-A1- 4 342 981
- DE-A1- 10 203 416

## Beschreibung

Die Erfindung betrifft eine Vorrichtung mit einem Kunststoff-Formteil, insbesondere einem Anbauteil und / oder Verkleidungsteil für ein Kraftfahrzeug, mit einem Deckel zum Verschließen einer Öffnung in einer Wandung des Kunststoff-Formteils, wobei der in die Öffnung eingesetzte Deckel eine Schließstellung, in der er die Öffnung verschließt, und eine Offenstellung, in der er aus der Öffnung entnehmbar und / oder in diese einsetzbar ist, einnehmen kann, wobei der Deckel eine Kontur aufweist, die im Wesentlichen komplementär zu der Öffnung ausgeformt ist, so dass der Deckel die Öffnung in der Schließstellung im Wesentlichen ausfüllt, wobei der Deckel einen ersten Rand und einen dem ersten Rand im Wesentlichen gegenüberliegenden zweiten Rand aufweist, wobei der Deckel auf seiner der Öffnung zugewandten Innenseite im Bereich des ersten Randes mindestens einen Rückhaltehaken aufweist, der die Öffnung in der Schließstellung des Deckels hintergreift, wobei der Deckel ferner an seiner Innenseite im Bereich des zweiten Randes mindestens ein Rastelement aufweist, das in der Schließstellung des Deckels mit mindestens einem wandungsfesten Rastgegenelement an der Wandung verrastet ist, wobei der Deckel an seiner Innenseite im Bereich des ersten Randes mindestens ein weiteres Zusatzrastelement aufweist, das mit mindestens einem Zusatzrastgegenelement an der Wandung zusammenwirkt.

Die DE 102 03 416 B4 offenbart einen Deckel zum Verschließen einer Öffnung, die in einer Wand eines Kraftfahrzeug-Verkleidungsteils ausgebildet ist. Der Verschlussdeckel ist dabei mit seiner Umfangskontur an den Ausschnitt des Verkleidungsteils angepasst. Die beschriebene Deckel-Wand-Anordnung beschreibt ferner, dass über Führungskonturen der Deckel leicht einsetzbar und abnehmbar ist und insbesondere die Gefahr von Beschädigungen an der Wand und / oder am Deckel beim Verschwenken des Deckels zwischen einer Schließ- und einer Offenstellung reduziert ist.

Aus der DE 43 42 981 A1 ist weiterhin eine Stoßfängerabdeckung mit einer Öffnung für eine abnehmbare Anhängerkupplung, und eine bei demontierter Anhängerkupplung die Öffnung abdeckende Klappe bekannt. Im geschlossenen Zustand ist die Klappe weitgehend flächenbündig in die Außenkontur des Stoßfängers integriert, wobei sie auf entgegen gesetzten Seiten über Klipshaken mit einem auf der Innenseite des Stoßfängers befestigten Rahmen verrastet ist. Zum Lösen der Verrastung ist die Klappe an ihrem Umfang mit mindestens einem Schlitz versehen, in den die Klinge eines Werkzeuges zum Niederdrücken des zugeordneten Klipshakens eingreifen kann. Bei einem lackiertem Stoßfänger soll ein gleichzeitiges Lackieren von Rahmen und Klappe möglich gemacht werden, wenn die Klappe mit einer Hilfseinrichtung in einem festen Abstand zum Rahmen gehalten wird, sich also nicht in ihrer Schließstellung in der Öffnung des Stoßfängers befindet.

Die EP 1 512 582 A1 offenbart eine Vorrichtung gemäß dem Oberbegriff des Anspruchs 1.

Nachteilig am Stand der Technik ist, dass der Deckel mittels eines Werkzeuges geöffnet werden muss, bzw. das bei einer Beaufschlagung des Stoßfängers mit Wärme während eines Lackiervorgangs der Deckel nicht in seiner Schließstellung innerhalb der Öffnung des Stoßfängers verbleiben darf.

Vor diesem Hintergrund liegt der Erfindung die Aufgabe zugrunde, eine Vorrichtung mit den eingangs beschriebenen Merkmalen anzugeben, die eine leichte Montage bzw. Demontage des Deckels ermöglicht, und der Deckel in seiner Schließstellung so in der Öffnung gehalten wird, dass ein Lackiervorgang keinen negativen Einfluss auf die Befestigungselemente des Deckels hat.

Erfindungsgemäß wird diese Aufgabe durch die kennzeichnenden Merkmale des Anspruchs 1 gelöst. Bei dem Deckel handelt es sich vorzugsweise um einen KunststoffDeckel. Eine Halterung bzw. Fixierung des Deckels ohne eine Vorspannung gegenüber der Öffnung gewährleistet vorteilhafterweise, dass insbesondere bei dem Trocknungs- bzw. Einbrennvorgang einer für den optischen und ästhetischen Eindruck erforderlichen Deckschicht (Grundier-, Primer, und Lackschichten), sich der Deckel in seiner Schließstellung durch die hohen Temperaturen des Lackiervorganges nicht lockern kann. Der Material- und Temperaturabhängige Vorspannkraftverlust der Befestigungselemente des Deckels führte bisher bei der Lackierung zu einer Lockerung des Deckels bzw. zu einer störenden Geräuschentwicklung beim Fahrbetrieb des Kraftfahrzeugs. Die erfindungsgemäße Vorrichtung ermöglicht, dass der Deckel in seiner Schließstellung so in der Öffnung gehalten wird, dass ein Lackiervorgang keinen negativen Einfluss auf die Befestigung des Deckels hat.

Der Deckel kann vorteilhafterweise in seiner Schließstellung fertig montiert zusammen mit dem Kunststoff-Formteil mit einer, vorzugsweise farbgebenden, Deckschicht versehen werden. Ein späterer Montageschritt, bzw. eine aufwendige und kostenintensive separate Lackierung von Deckel und Kunststoff-Formteil kann daher bei der erfindungsgemäßen Vorrichtung entfallen. Zudem ist gewährleistet, dass es zu keinen Differenzen in dem farblichen und visuellen Eindruck der Deckschicht kommt, da der Deckel und das Kunststoff-Formteil einen identischen Aufbau der Deckschicht aufweisen. Vorzugsweise besteht daher der Deckel aus demselben Material wie das Kunststoff-Formteil.

Das Rastelement kann so ausgebildet sein, dass bei einer Krafteinwirkung im Wesentlichen nur das Rastelement nachgibt und aus dem Rastgegenelement ausrastet. Erfindungsgemäß kann aber auch das Rastelement im Wesentlichen starr ausgebildet sein, und das Rastgegenelement so ausgebildet sein, dass dieses bei einer Krafteinwirkung nachgibt und das Rastelement aus dem Rastgegenelement ausrastet. Im Rahmen der Erfindung können sowohl das Rastelement, als auch das Rastgegenelement so ausgebildet sein, dass diese unter einer Krafteinwirkung nachgeben und das Rastelement aus dem Rastgegenelement ausrastet. Analog kann auch das Zusatzrastelement und / oder das Zusatzrastgegenelement so ausgebildet sein, dass dies / diese bei einer Krafteinwirkung nachgibt / nachgeben und das Zusatzrastelement aus dem Zusatzrastgegenelement ausrastet.

Zur Montage des Deckels ist vorzugsweise eine geringere Kraft erforderlich als zur Demontage. Eine geringe notwendige Kraft bei der Montage ermöglicht eine leichte, kostengünstige und schnelle Montierbarkeit des Deckels. Die erfindungsgemäß höhere Demontagekraft gewährleistet, dass eine weiter erhöhte Sicherheit gegenüber einem unbeabsichtigten bzw. ungewollten Lösen des Deckels aus der Wandung des Kunststoff-Formteils erreicht wird. Obgleich der Deckel eine gegenüber der Montagekraft höhere Demontagekraft aufweist kann erfindungsgemäß auf den Einsatz von Werkzeugen bei der Demontage verzichtet werden. Zudem muss auf der Außenseite keine Aussparung für ein derartiges Werkzeug vorgesehen werden, so dass keine optische Beeinträchtigung der ansonsten flachenbündigen Außenseite der Deckel-Formteil-Anordnung vorliegt.

In der Schließstellung des Deckels dient das Zusatzrastgegenelement als Anschlag für das Zusatzrastelement. Das Zusatzrastelement ist so ausgebildet, dass dieses in der Schließstellung des Deckels zunächst an dem Zusatzrastgegenelement anliegt und erst bei einer ausreichenden Druckkrafteinwirkung aus dem Zusatzrastgegenelement ausrastet. Hierdurch wird vorteilhafterweise gewährleistet, dass der Deckel bei einer entsprechend geringeren Krafteinwirkung zunächst in seiner Schließstellung exakt positioniert bleibt. Erst bei einem gezielten Öffnungsvorgang mit einer hinreichenden Krafteinwirkung gibt das Zusatzrastgegenelement nach, damit das Zusatzrastelement ausrasten und den Deckel in die Offenstellung freigeben kann. Erfindungsgemäß kann auch das Zusatzrastelement so ausgebildet sein, dass bei einer hinreichenden Krafteinwirkung das Zusatzrastelement nachgibt, damit das Zusatzrastelement ausrasten und den Deckel in die Offenstellung freigeben kann.

Erfindungsgemäß sind der Rückhaltehaken, das Rastelement und das Zusatzrastelement derart ausgebildet, dass sie gemeinsam den Deckel in der Schließstellung mit geringem Spiel gegenüber der Wandung fixieren. Die Rückhaltehaken und das Zusatzrastelement können so aufeinander abgestimmt sein, dass die Rückhaltehaken in der Schließstellung des Deckels die Öffnung der Wandung hintergreifen und gleichzeitig das Zusatzrastelement so an dem Anschlag des Zusatzrastgegenelements anliegt, dass der Deckel im Bereich des ersten Randes mit einem geringen Spiel in der Öffnung fixiert ist. Im Bereich des zweiten Randes kann das Rastelement so ausgebildet sein, dass es in der Schließstellung des Deckels mit dem Rastgegenelement und einer Auflagefläche der Wandung des Kunststoff-Formteils so zusammenwirkt, dass der Deckel in der Einrastposition (Schließstellung des Deckels) des Rastelements im Bereich des zweiten Randes mit einem geringen Spiel in der Öffnung fixiert ist.

Das Rastelement und das Zusatzrastelement können derart ausgebildet sein, dass bei einem Öffnungsvorgang des Deckels das Rastelement erst nach oder gleichzeitig mit dem Zusatzrastelement ausrastet. Erst dann wird der Deckel in die Offenstellung freigegeben. Da bei der Montage des Deckels nur das Rastelement, bzw. das Rastgegenelement nachgeben, bzw. auslenken müssen ist die Montagekraft entsprechend geringer als bei der Demontage. Bei der Demontage können das Rastelement und das Zusatzrastgegenelement (und / oder das Rastgegenelement und das Zusatzrastelement) unter einer auf den Deckel aufgebrachten Druckkrafteinwirkung gemeinsam nachgeben. Die bei der Demontage für einen Öffnungsvorgang hinreichende Druckkrafteinwirkung auf den Deckel erreicht entsprechend einen höheren Wert als die nötige Druckkraft bei der Montage des Deckels.

Der erste Rand des Deckels weist vorzugsweise mehrere Rückhaltehaken auf, die weiter vorzugsweise in gleichen Abständen zueinander angeordnet sind. Durch eine Vielzahl von Rückhaltehaken wird das Einsetzen des Deckels in die Öffnung erleichtert und vorteilhafterweise der Deckel an mehreren Stellen in Relation zu der Öffnung fixiert bzw. positioniert.

Vorzugsweise weist der Deckel auf seiner Innenseite zusätzlich mindestens ein Zentrierelement auf, das mit der Öffnung und / oder mit mindestens einem Zentriergegenelement im Bereich der Öffnung zusammenwirkt. Das Zentrierelement erleichtert den Montagevorgang des Deckels von der Offenstellung in seine endgültige Schließstellung.

Vorteilhafterweise kann der Deckel zusätzlich eine angeformte Fangleine aufweisen, die mit der Wandung verliersicher verbindbar ist. Die Fangleine gewährleistet, dass in der Offenstellung der Deckel mit der Wandung derart verbunden bleibt, dass der Deckel nicht verloren werden kann.

Die Fangleine kann an ihrem dem Deckel abgewandten Ende ein Klipselement oder ein Schnappelement aufweisen, das mit einer entsprechenden Aufnahme an der Wandung zusammenwirkt, um die Fangleine mit der Wandung zu verbinden. Das Klipselement oder das Schnappelement kann einstückig an die Fangleine angeformt sein. Das Klipselement oder das Schnappelement gewährleistet eine schnelle und einfache Verbindung von Fangleine und Wandung des Kunststoff-Formteils. Vorzugsweise ist das Klipselement oder das Schnappelement einstückig an die Fangleine angeformt.

Vorzugsweise sind das Rastelement und / oder der Rückhaltehaken und / oder das Zusatzrastelement und / oder das Zentrierelement und / oder die Fangleine einstückig an den Deckel angeformt. Weiter vorzugsweise ist der Deckel als Kunststoffspritzgussteil ausgebildet.

Das Rastgegenelement und / oder das Zusatzrastgegenelement und / oder das Zentriergegenelement und / oder die Aufnahme kann / können ebenfalls einstückig an die Wandung des Kunststoff-Formteils angeformt sein. Vorzugsweise ist das Kunststoff-Formteil als Stoßfängerverkleidung oder als Kotflügel eines Kraftfahrzeugs ausgebildet und ist weiter vorzugsweise als Kunststoffspritzgussteil ausgebildet.

Der Deckel und das Kunststoff-Formteil können mindestens eine Deckschicht aufweisen. Die Deckschicht weist vorzugsweise mindestens eine Lackschicht und / oder mindestens eine Grundierschicht und / oder mindestens eine Primerschicht auf. Weiter vorzugsweise erfolgt die Aufbringung der Deckschicht auf den Deckel zusammen mit dem Aufbringen derselben Deckschicht auf das Kunststoff-Formteils, wobei der Deckel sich in seiner Schließstellung in der Öffnung des Kunststoff-Formteils befindet. Durch die erfindungsgemäße Vorrichtung ist gewährleistet, dass beim Trocken- bzw. Einbrennvorgang der Deckschicht der Deckel ohne eine Vorspannung gegenüber der Öffnung gehalten ist. Vor dem Aufbringen der Deckschicht können der Deckel und das Kunststoff-Formteil einer Vorbehandlung zur Aktivierung der Oberfläche unterworfen werden, vorzugsweise einer Plasma- und / oder Corona-Vorbehandlung und / oder Beflammung.

Ein Verfahren mit einer Vorrichtung gemäß einem der Ansprüche 1 bis 12 umfasst die folgenden Schritte: Einsetzen des Deckels in die Öffnung in der Wandung des Kunststoff-Formteils, insbesondere eines Anbauteils und / oder eines Verkleidungsteils für ein Kraftfahrzeug. Verschließen der Öffnung in der Wandung des Kunststoff-Formteils mit dem Deckel. Aktivierung der Oberfläche von Deckel und Kunststoff-Formteil, vorzugsweise mittels einer Beflammung und / oder einer Plasma- und / oder Corona-Vorbehandlung. Aufbringen einer Deckschicht auf das Kunststoff-Formteil und den Deckel, wobei die Deckschicht eine Primerschicht und / oder eine Grundierungsschicht und / oder eine farbgebende Lackschicht und / oder eine Klarlackschicht umfasst. Trocknen bzw. Einbrennen der Deckschicht und vorzugsweise eine abschließende Qualitätskontrolle.

### Ausführungsbeispiele

Im Folgenden wird die Erfindung anhand einer lediglich ein Ausführungsbeispiel darstellenden Zeichnung erläutert. Es zeigen schematisch:
- Fig. 1: eine Innenansicht der erfindungsgemäßen Vorrichtung mit dem Deckel in seiner Schließstellung innerhalb der Öffnung des Kunststoff-Formteils
- Fig. 2: Außenansicht eines erfindungsgemäßen Deckels
- Fig. 3: ein erfindungsgemäßes Kunststoff-Formteil mit einer Öffnung
- Fig. 4: eine Schnittdarstellung entlang der Schnittlinie A-A in Fig. 1
- Fig. 5: eine Außenansicht des erfindungsgemäßen Deckels
- Fig. 6: eine Außenansicht der erfindungsgemäßen Vorrichtung mit dem Deckel in seiner Schließstellung innerhalb der Öffnung des Kunststoff-Formteils
- Fig. 7: eine weitere Schnittdarstellung gemäß Fig. 4, die sich bei einem Öffnungsvorgang ergibt

In den Figuren werden gleiche oder funktionsgleiche Elemente mit den gleichen Bezugszeichen versehen.

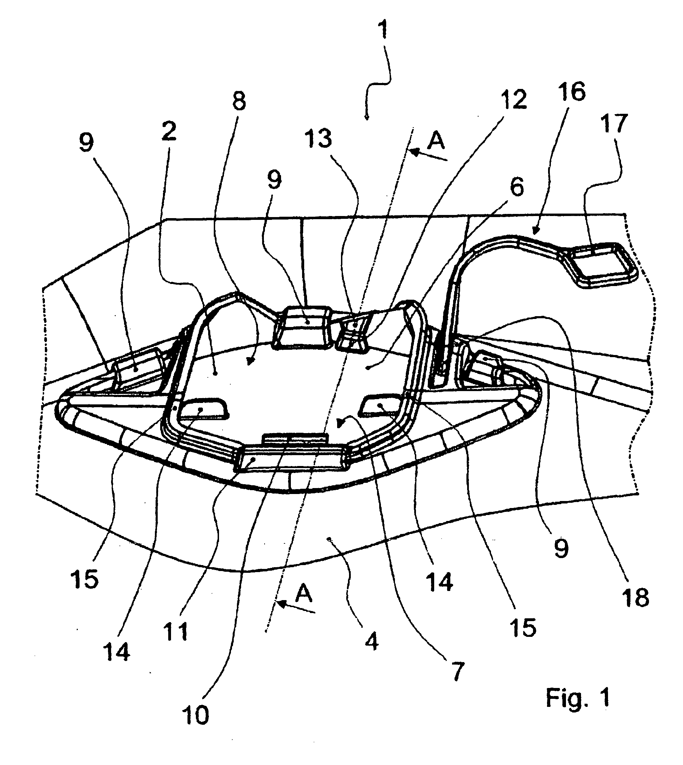

Die Fig. 1 zeigt eine Vorrichtung mit einem Kunststoff-Formteil 1, insbesondere einem Anbauteil und / oder Verkleidungsteil für ein Kraftfahrzeug, mit einem Deckel 2 zum Verschließen einer Öffnung 3 in einer Wandung 4 des Kunststoff-Formteils 1. Der in die Öffnung 3 eingesetzte Deckel 2 befindet sich in seiner Schließstellung, in der er die Öffnung 3 verschließt. In der nicht näher dargestellten Offenstellung ist der Deckel aus der Öffnung 3 entnehmbar und / oder in diesen einsetzbar. Weiterhin weist der Deckel 2 eine Kontur auf, die im Wesentlichen komplementär zu der Öffnung 3 ausgeformt ist, so dass der Deckel 2 die Öffnung 3 in der Schließstellung im Wesentlichen ausfüllt. Der Deckel weist weiterhin einen ersten Rand 6 und einen dem ersten Rand 6 im Wesentlichen gegenüberliegenden zweiten Rand 7 auf. Der Deckel 2 weist auf seiner Öffnung 3 zugewandten Innenseite 8 im Bereich des ersten Randes 6 mehrere Rückhaltehaken 9 auf, die die Öffnung 3 in der Schließstellung des Deckels 2 hintergreifen. Ferner weist der Deckel 2 an seiner Innenseite 8 im Bereich des zweiten Randes 7 ein Rastelement 10 auf, das in der Schließstellung des Deckels 2 mit einem wandungsfesten Rastgegenelement 11 an der Wandung 4 verrastet ist. Erfindungsgemäß weist der Deckel 2 an seiner Innenseite 8 im Bereich des ersten Randes 6 ein weiteres Zusatzrastelement 12 auf, das mit einem Zusatzrastgegenelement 13 an der Wandung 4 zusammenwirkt. Der Deckel 2 wird in seiner Schließstellung ohne Vorspannung gegenüber der Öffnung 3 gehalten. Der Deckel 2 weist zusätzlich eine angeformte Fangleine 16 auf, die mit der Wandung 4 verliersicher verbunden ist. Die Fangleine 16 weist an ihrem dem Deckel 2 abgewandten Ende ein Klipselement 17 auf, das mit einer entsprechenden Aufnahme 18 an der Wandung 4 zusammenwirkt, um die Fangleine 16 mit der Wandung 4 zu verbinden. Der Deckel 2 weist weiterhin auf seiner Innenseite 8 zusätzlich zwei Zentrierelemente 14 auf, die mit der Öffnung 3 bzw. mit Zentriergegenelementen 15 im Bereich der Öffnung 3 zusammenwirken. Das Rastelement 10, die Rückhaltehaken 9, das Zusatzrastelement 12 und das Zentrierelement 14 sowie die Fangleine 16 sind einstückig in einem Kunststoffspritzgussverfahren an den Deckel 2 angeformt. Das Rastgegenelement 11, das Zusatzrastgegenelement 13, das Zentriergegenelement 15 und die Aufnahme 18 sind ebenfalls einstückig an die Wandung 4 des Kunststoff-Formteils 1 in einem Kunststoffspritzgussverfahren angeformt. Das Kunststoff-Formteil 1 ist in dem dargestellten Ausführungsbeispiel als Stoßfängerverkleidung ausgebildet. Die Öffnung 3 dient vorzugsweise dazu, durch die Stoßfängerverkleidung (Kunststoff-Formteil 1) hindurch einen Zugang zu einer hier nicht näher dargestellten Abschleppeinrichtung, insbesondere zu einer Abschleppöse, bzw. einem Abschlepphaken zu ermöglichen.

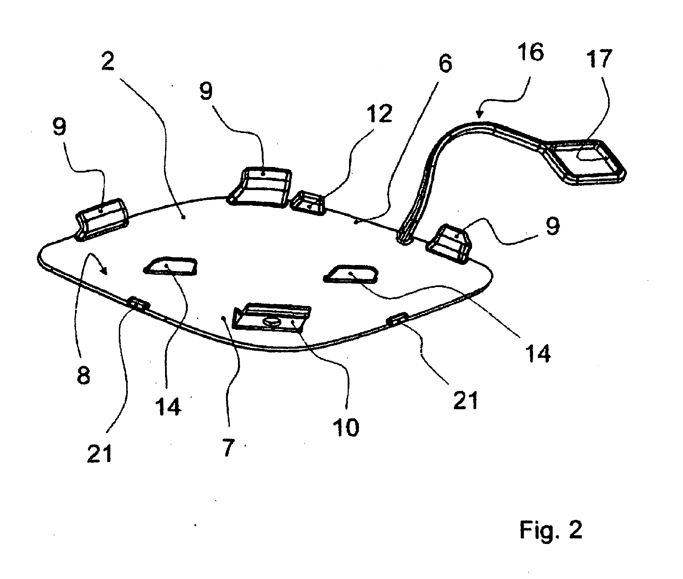

Die in der Fig. 2 dargestellte Innenansicht 8 des Deckels 2, zeigt die Seite des Deckels 2 die der Öffnung 3 in der Schließstellung zugewandt ist. Der erste Rand 6 weist mehrere Rückhaltehaken 9 auf, die im Wesentlichen in gleichen Abständen zueinander angeordnet sind. Weiterhin weist der Deckel 2 zusätzliche Abstandshalter 21 auf, die den Deckel 2 in seiner Schließstellung in äquidistantem Abstand zu der Kontur der Öffnung 4 des Kunststoff-Formteils 1 halten. Die Abstandshalter 21 stehen seitlich über der Innenseite 8 des Deckels 2 hervor und sorgen in der Schließstellung für ein gleichmäßiges Spaltmaß zwischen Deckel 2 und Kunststoff-Formteil 1. In dem dargestellten Ausführungsbeispiel sind die Abstandshalter 21 einstückig im Bereich des zweiten Randes 7 angeformt, es ist aber auch möglich, dass die Abstandshalter 21 einstückig am ersten Rand 6 angeformt sind, bzw. sowohl der erste Rand 6 als auch der zweite Rand 7 einen oder mehrere Abstandshalter 21 aufweisen.

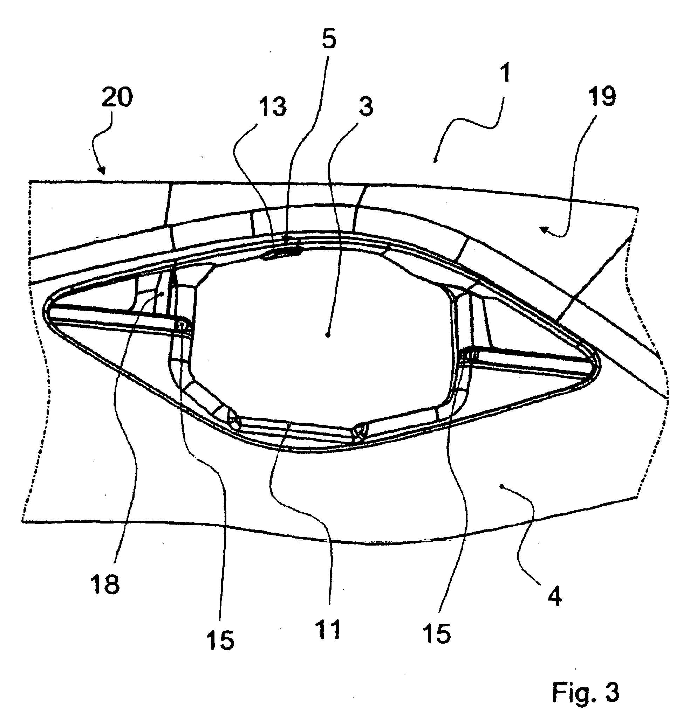

Die Fig. 3 zeigt in seiner Außenansicht 20 ein Kunststoff-Formteil 1 mit einer Öffnung 3, wobei in die Öffnung 3 kein Deckel eingesetzt ist. In diesem Ausführungsbeispiel handelt es sich bei dem Kunststoff-Formteil 1 um einen Kotflügel eines Kraftfahrzeugs. Im Bereich der Öffnung 3 sind zwei Zentriergegenelemente 15 erkennbar, die mit den hier nicht dargestellten Zentrierelementen 14 des Deckels 2 zusammenwirken. Das Zusatzrastgegenelement 13 ist so ausgebildet, dass es in der Schließstellung des Deckels 2 zusätzlich als Anschlag 5 für das (hier nicht dargestellte) Zusatzrastelement 12 des Deckels 2 dient. Das Kunststoff-Formteil 1, bzw. die Wandung 4 weist auf der Außenseite eine Deckschicht 19 auf. In die dargestellte Aufnahme 18 wird ein Schnappelement 17 der Fangleine 16 des Deckels 2 eingeführt und verbindet die Fangleine 16 somit mit der Wandung 4 des Kunststoff-Formteils 1.

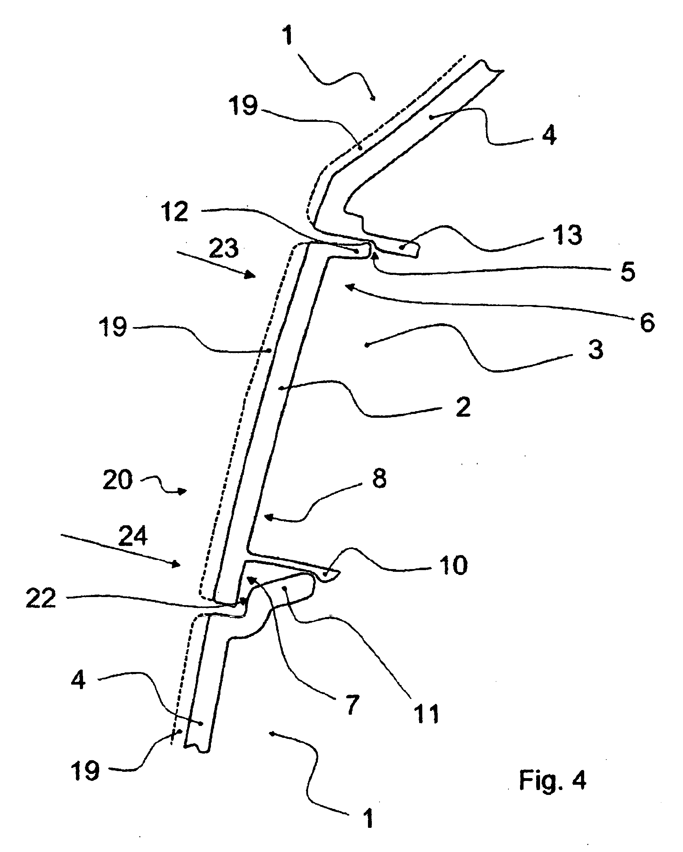

Der in Fig. 4 dargestellte Schnitt entlang der Schnittgeraden A-A aus Fig. 1 zeigt den Deckel 2 in seiner Schließstellung innerhalb der Öffnung 3 in der Wandung 4 des Kunststoff-Formteils 1. Im Bereich des ersten Randes 6 weist der Deckel auf seiner Innenseite 8 ein Zusatzrastelement 12 auf, das mit einem Zusatzrastgegenelement 13 der Wandung 4 bzw. des Kunststoff-Formteils 1 zusammenwirkt. Im Bereich des zweiten Randes 7 befindet sich ein Rastelement 10, das mit einem Rastgegenelement 11 der Wandung 4 bzw. des Kunststoff-Formteils 1 zusammenwirkt. An der von einem Benutzer sichtbaren Außenseite 20 weisen sowohl das Kunststoff-Formteil 1 als auch der Deckel 2 eine Deckschicht 19 auf. In diesem Fall wird die Deckschicht 19 aus einer Grundierungsschicht bzw. einer Primerschicht gebildet sowie aus einer farbgebenden Lackschicht und einer Klarlackschicht. Die einzelnen Schichten der Deckschicht 19 auf dem Kunststoff-Formteil 1 und dem Deckel 2 wurden in der Schließstellung des Deckels 2 innerhalb der Öffnung 3 aufgebracht. Vorteilhafterweise weist der Deckel 2 und das Kunststoff-Formteil 1 an ihren jeweiligen Außenseiten daher den selben Deckschichtaufbau 19 auf, um den Deckel 2 in seiner Schließstellung auch optisch und haptisch in die Wandung 4 zu integrieren. Der Fig. 4 kann weiterhin entnommen werden, dass der zweite Rand 7 des Deckels sich bei einer auf die Außenseite 20 des Deckels 2 im Bereich des zweiten Randes 7 einwirkenden Druckkraft 24 an einer Auflagefläche 22 der Wandung 4 abstützt. Durch eine auf die Außenseite 20 im Bereich des ersten Randes 6 des Deckels 2 einwirkende Druckkraft 23 dient das Zusatzrastgegenelement 13 zunächst als Anschlag 5 für das Zusatzrastelement 12. Erst nach Überschreiten einer hinreichenden Druckkrafteinwirkung 23 weicht das Zusatzrastgegenelement 13 aus und das Zusatzrastelement 12 kann ausrasten, so dass der Deckel 2 im Bereich des ersten Randes 6 in die Öffnung 3 hineinschwenkt.

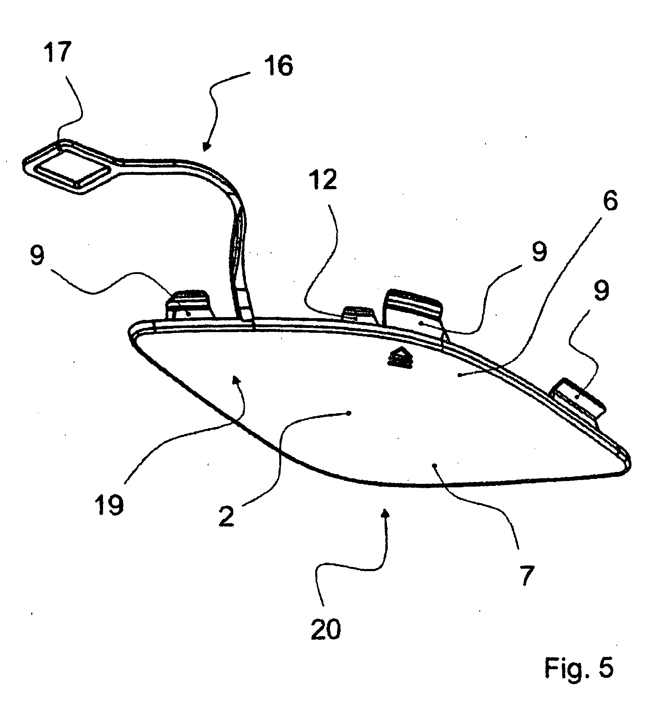

Die in Fig. 5 dargestellte Außenansicht 20 des Deckels 2 der Vorrichtung verdeutlicht nochmals im Detail die Anordnung der Rückhaltehaken 9 und des Zusatzrastelementes 12. Die Rückhaltehaken 9, das Rastelement 10 und das Zusatzrastelement 12 sind derart ausgebildet, dass sie gemeinsam den Deckel 2 in der Schließstellung mit geringem Spiel gegenüber der (hier nicht dargestellten) Wandung 4 fixieren. Die Rückhaltehaken 9 und das Zusatzrastelement 12 sind so aufeinander abgestimmt, dass die Rückhaltehaken 9 in der Schließstellung des Deckels 2 die Öffnung 3 der Wandung 4 hintergreifen und gleichzeitig das Zusatzrastelement 12 an dem Anschlag 5 des Zusatzrastgegenelements 13 anliegt, so dass der Deckel 2 im Bereich des ersten Randes 6 mit einem geringen Spiel in der Öffnung 3 fixiert ist. Im Bereich des zweiten Randes 7 ist das Rastelement 10 so ausgebildet, dass es in der Schließstellung des Deckels 2 mit dem Rastgegenelement 11 und der Auflagefläche 22 so aufeinander abgestimmt ist, dass der Deckel in der Einrastposition (Schließstellung des Deckels) des Rastelements 10 im Bereich des zweiten Randes 7 mit einem geringen Spiel in der Öffnung 3 fixiert ist. Erfindungsgemäß ist der Deckel 2 in der Schließstellung daher im Wesentlichen ohne eine Vorspannung gegenüber der Öffnung 3 gehalten.

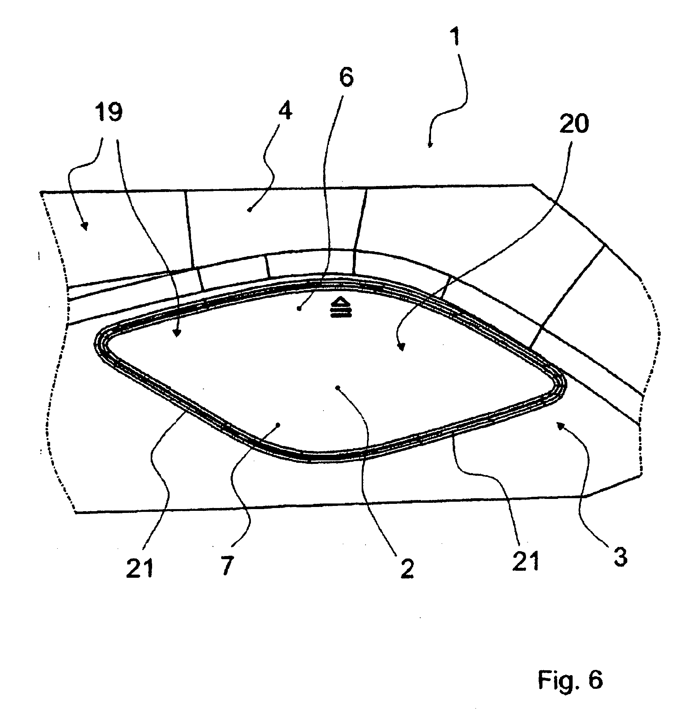

Die Fig. 6 zeigt eine Außenansicht 20 des Deckels 2 und der Wandung 4 des Kunststoff-Formteils 1, wobei der Deckel 2 sich in seiner Schließstellung innerhalb der Öffnung 3 in der Wandung 4 des Kunststoff-Formteils 1 befindet, so dass der Deckel 2 die Öffnung 3 im Wesentlichen ausfüllt. Die beiden Abstandshalter 21 im Bereich des zweiten Randes 7 ermöglichen die Einhaltung eines exakten und gleichmäßigen Spaltmaßes zwischen dem Kunststoff-Formteil 1 und dem Deckel 2. Der Deckel 2 und das Kunststoff-Formteil 1 weisen eine Deckschicht 19 auf, die in der Schließstellung des Deckels 2 auf den Deckel 2 und das Kunststoff-Formteil 1 aufgebracht wurde.

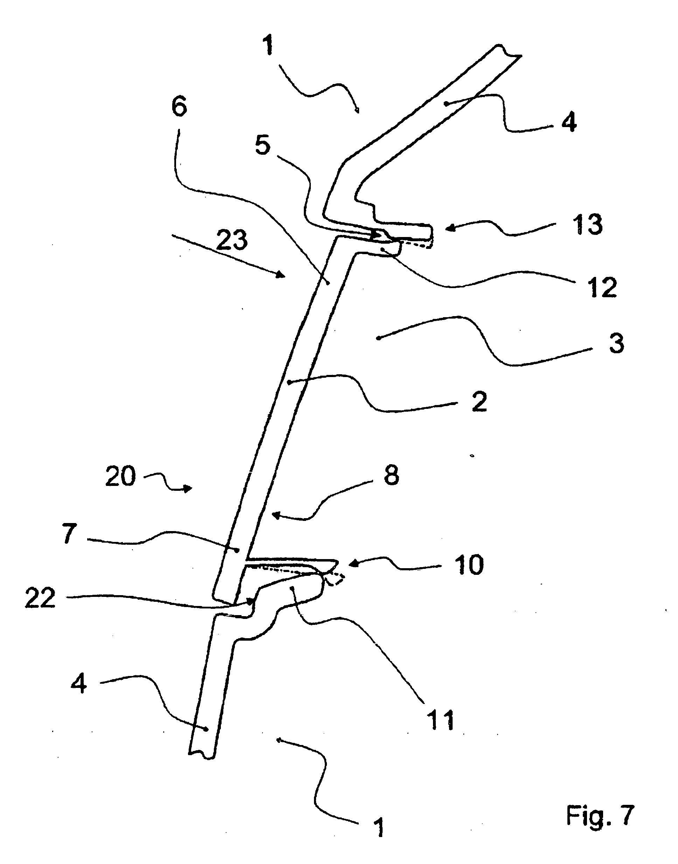

Die Fig. 7 zeigt in Anlehnung an Fig. 4 eine Schnittdarstellung der Vorrichtung mit einem Deckel 2 der sich in einer Öffnung 3 in einer Wandung 4 eines Kunststoff-Formteils 1 befindet. In der in Figur 4 dargestellten Schließstellung ist der Deckel 2 im Wesentlichen ohne eine Vorspannung gegenüber der Öffnung 3 gehalten. Um den Deckel 2 von seiner Schließstellung in seine Offenstellung zu überführen, wird entsprechend einem Pfeil 23 an der Außenseite 20 des Deckels im Bereich des ersten Randes 6 eine Druckkraft 23 in den Deckel 2 eingeleitet. Dies kann beispielsweise durch eine Druckkraft 23 mit einem Finger eines Benutzers der Vorrichtung entsprechend dem Pfeil 23 erfolgen. Ist die Druckkrafteinwirkung 23 hinreichend groß, kann das Zusatzrastgegenelement 13, aufgrund der erfindungsgemäßen Ausbildung von Zusatzrastelement 12 und Zusatzrastgegenelement 13, nachgeben und das Zusatzrastelement 12 aus dem Zusatzrastgegenelement 13 ausrastet. Gleichzeitig schwenkt der Deckel 2 während des Öffnungsvorgangs im Bereich des ersten Randes 6 in die Öffnung 3 hinein. Das Hineinschwenken des ersten Randes 6 des Deckels 2 bedingt gleichzeitig eine Zugkraft auf das Rastelement 10. Vorteilhafterweise geben daher das Rastelement 10 und das Zusatzrastgegenelement 13 gemeinsam nach, was bei dem Öffnungsvorgang zu einer insgesamt größeren nötigen Druckkrafteinwirkung 23 führt, insbesondere in Relation zu den Montagekräften des Deckels 2. Da bei der Montage lediglich das Rastelement 10 auslenken, bzw. nachgeben muss ist bei der Montage des Deckels 2 eine geringere Kraft erforderlich ist als zur Demontage. Das Rastelement 10 und das Zusatzrastelement 12 sind derart ausgebildet, dass bei dem Öffnungsvorgang, bzw. der Demontage des Deckels 2 das Rastelement 10 daher vorteilhaft erst nach oder gleichzeitig mit dem Zusatzrastelement 12 ausrastet. In der Fig. 7 ist der Vorgang des Nachgebens von Zusatzrastgegenelement 13 und Rastelement 10 durch die gestrichelt dargestellte Ausgangslage von Zusatzrastgegenelement 13 und Rastelement 10 in der Schließstellung bzw. vor dem Öffnungsvorgang verdeutlicht. Im Rahmen der Erfindung kann auch das Zusatzrastelement 12 und das Rastgegenelement 11 so ausgebildet sein, dass diese bei einer Druckkrafteinwirkung 23 nachgeben und so zu einem Ausrasten des Rastelements 10, bzw. Zusatzrastelements 12 führen. Weiterhin im Rahmen der Erfindung können sowohl Rastelement 10 und Rastgegenelement 11, sowie Zusatzrastelement 12 und Zusatzrastgegenelement 13 bei einer hinreichenden Druckkrafteinwirkung 23 nachgeben und so zu einem Ausrasten des Rastelements 10, bzw. Zusatzrastelements 12 führen.

### Bezugszeichenliste

- 1: Kunststoff-Formteit
- 2: Deckel
- 3: Öffnung
- 4: Wandung
- 5: Anschlag
- 6: Erster Rand
- 7: Zweiter Rand
- 8: Innenseite
- 9: Rückhaltehaken
- 10: Rastelement
- 11: Rastgegenelement
- 12: Zusatzrastelement
- 13: Zusatzrastgegenelement
- 14: Zentrierelement
- 15: Zentriergegenelement
- 16: Fangleine
- 17: Klipselement
- 17: Schnappelement
- 18: Aufnahme
- 19: Deckschicht
- 20: Außenseite
- 21: Abstandshalter
- 22: Auflagefläche
- 23, 24: Druckkraft

## Patentansprüche

1. Vorrichtung mit mit
- einem Kunststoff-Formteil (1), insbesondere einem Anbauteil und / oder Verkleidungsteil für ein Kraftfahrzeug,
- mit einem Deckel (2) zum Verschließen einer Öffnung (3) in einer Wandung (4) des Kunststoff-Formteils (1),
- wobei der in die Öffnung (3) eingesetzte Deckel (2) eine Schließstellung, in der er die Öffnung (3) verschließt, und eine Offenstellung, in der er aus der Öffnung (3) entnehmbar und / oder in diese einsetzbar ist, einnehmen kann,
- wobei der Deckel (2) eine Kontur aufweist, die im Wesentlichen komplementär zu der Öffnung (3) ausgeformt ist, so dass der Deckel (2) die Öffnung (3) in der Schließstellung im Wesentlichen ausfüllt,
- wobei der Deckel (2) einen ersten Rand (6) und einen dem ersten Rand (6) gegenüberliegenden zweiten Rand (7) aufweist,
- wobei der Deckel (2) auf seiner der Öffnung (3) zugewandten Innenseite (8) im Bereich des ersten Randes (6) mindestens einen Rückhaltehaken (9) aufweist, der die Öffnung (3) in der Schließstellung des Deckels (2) hintergreift,
- wobei der Deckel (2) ferner an seiner Innenseite (8) im Bereich des zweiten Randes (7) mindestens ein Rastelement (10) aufweist, das in der Schließstellung des Deckels (2) mit mindestens einem wandungsfesten Rastgegenelement (11) an der Wandung (4) verrastet ist, wobei
- der Deckel (2) an seiner Innenseite (8) im Bereich des ersten Randes (6) mindestens ein weiteres Zusatzrastelement (12) aufweist, das mit mindestens einem Zusatzrastgegenelement (13) an der Wandung (4) zusammenwirkt,
**dadurch gekennzeichnet, dass**
- der zweite Rand (7) des Deckels (2) sich bei einer auf die Außenseite (20) des Deckels (2) im Bereich des zweiten Randes (7) einwirkenden Druckkraft (24) an einer Auflagefläche (22) der Wandung (4) abstützt, und
- in der Schließstellung des Deckels (2), durch eine auf die Außenseite (20) im Bereich des ersten Randes (6) des Deckels (2) einwirkende Druckkraft (23) das Zusatzrastgegenelement (13) zunächst als Anschlag (5) für das Zusatzrastelement (12) dient,
- wobei erst bei einem gezielten Öffnungsvorgang mit einer hinreichenden Krafteinwirkung (23) das Zusatzrastgegenelement (13) nachgibt, damit das Zusatzrastelement (12) ausrastet und den Deckel (2) in die Offenstellung freigeben kann,
- oder wobei das Zusatzrastelement (12) so ausgebildet ist, dass bei einer hinreichenden Krafteinwirkung (23) das Zusatzrastelement (12) nachgibt, damit das Zusatzrastelement (12) ausrasten und den Deckel (2) in die Offenstellung freigeben kann, und
- der Rückhaltehaken (9), das Rastelement (10) und das Zusatzrastelement (12) derart ausgebildet sind, dass sie gemeinsam den Deckel (2) in der Schließstellung mit geringem Spiel gegenüber der Wandung (4) fixieren,
- und der Deckel (2) in der Schließstellung zumindest im Wesentlichen ohne Vorspannung gegenüber der Öffnung (3) gehalten ist.

2. Vorrichtung nach Anspruch 1, **dadurch gekennzeichnet, dass** zur Montage des Deckels (2) eine geringere Kraft erforderlich ist als zur Demontage.

3. Vorrichtung nach einem der Ansprüche 1 oder 2, **dadurch gekennzeichnet, dass** das Rastelement (10) und das Zusatzrastelement (12) derart ausgebildet sind, dass bei einem Öffnungsvorgang des Deckels (2) das Rastelement (10) erst nach oder gleichzeitig mit dem Zusatzrastelement (12) ausrastet.

4. Vorrichtung nach einem der Ansprüche 1 bis 3, **dadurch gekennzeichnet, dass** der erste Rand (6) mehrere Rückhaltehaken (9) aufweist, die vorzugsweise in gleichen Abständen zueinander angeordnet sind.

5. Vorrichtung nach einem der Ansprüche 1 bis 4, **dadurch gekennzeichnet, dass** der Deckel (2) auf seiner Innenseite (8) zusätzlich mindestens ein Zentrierelement (14) aufweist, das mit der Öffnung (3) und / oder mit mindestens einem Zentriergegenelement (15) im Bereich der Öffnung (3) zusammenwirkt.

6. Vorrichtung nach einem der Ansprüche 1 bis 5, **dadurch gekennzeichnet, dass** der Deckel (2) zusätzlich eine angeformte Fangleine (16) aufweist, die mit der Wandung (4) verliersicher verbindbar ist.

7. Vorrichtung nach Anspruch 6, **dadurch gekennzeichnet, dass** die Fangleine (16) an ihrem dem Deckel (2) abgewandten Ende ein Klipselement (17) oder ein Schnappelement (17) aufweist, das mit einer entsprechenden Aufnahme (18) an der Wandung (4) zusammenwirkt, um die Fangleine (16) mit der Wandung (4) zu verbinden.

8. Vorrichtung nach einem der Ansprüche 1 bis 7, **dadurch gekennzeichnet, dass** das Rastelement (10) und / oder der Rückhaltehaken (9) und / oder das Zusatzrastelement (12) und / oder das Zentrierelement (14) und / oder die Fangleine (16) einstückig an den Deckel (2) angeformt ist / sind.

9. Vorrichtung nach einem der Ansprüche 1 bis 7, **dadurch gekennzeichnet, dass** das Rastgegenelement (11) und / oder das Zusatzrastgegenelement (13) und / oder das Zentriergegenelement (15) und / oder die Aufnahme (18) einstückig an die Wandung (4) des Kunststoff-Formteils (1) angeformt ist / sind.

10. Vorrichtung nach einem der Ansprüche 1 bis 9, **dadurch gekennzeichnet, dass** das Kunststoff-Formteil (1) als Stoßfängerverkleidung oder Kotflügel eines Kraftfahrzeuges ausgebildet ist.

11. Vorrichtung nach einem der Ansprüche 1 bis 10, **dadurch gekennzeichnet, dass** der Deckel (2) und das Kunststoff-Formteil (1) mindestens eine Deckschicht (19) aufweisen.

12. Vorrichtung nach Anspruch 11, **dadurch gekennzeichnet, dass** die Deckschicht mindestens eine Lackschicht und / oder mindestens eine Grundierschicht und / oder mindestens eine Primerschicht aufweist.

13. Kraftfahrzeug mit einer Vorrichtung nach einem der Ansprüche 1 bis 12.

## Claims

1. Device having
- a plastic moulded part (1), in particular an add-on part and/or a trim part for a motor vehicle,
- having a cover (2) for closing an opening (3) in a wall (4) of the plastic moulded part (1),
- the cover (2) inserted into the opening (3) being able to assume a closed position, in which it closes the opening (3), and an open position, in which it can be removed from and/or can be inserted into the opening (3),
- the cover (2) having a contour that is shaped substantially to complement the opening (3), so that the cover (2) substantially fills the opening (3) in the closed position,
- the cover (2) having a first periphery (6) and a second periphery (7), lying opposite the first periphery (6),
- the cover (2) having on its inner side (8), facing the opening (3), in the region of the first periphery (6), at least one retaining hook (9), which grips behind the opening (3) in the closed position of the cover (2),
- the cover (2) also having on its inner side (8), in the region of the second periphery (7), at least one engaging element (10), which in the closed position of the cover (2) engages with at least one engaging counter element (11) on the wall (4) that is fixed to the wall,
- the cover (2) having on its inner side (8), in the region of the first periphery (6), at least one further additional engaging element (12), which interacts with at least one additional engaging counter element (13) on the wall (4),
**characterized in that**
- the second periphery (7) of the cover (2) is supported on a bearing surface (22) of the wall (4) when there is a compressive force (24) acting on the outer side (20) of the cover (2) in the region of the second periphery (7), and
- in the closed position of the cover (2), a compressive force (23) acting on the outer side (20) in the region of the first periphery (6) of the cover (2) has the effect that the additional engaging counter element (13) initially serves as a stop (5) for the additional engaging element (12),
- the additional engaging counter element (13) only giving way when there is a deliberate opening operation with a sufficient applied force (23), in order that the additional engaging element (12) disengages and can release the cover (2) into the open position,
- or the additional engaging element (12) being formed such that, when there is a sufficient applied force (23), the additional engaging element (12) gives way, in order that the additional engaging element (12) can disengage and release the cover (2) into the open position, and
- the retaining hook (9), the engaging element (10) and the additional engaging element (12) being formed in such a way that they jointly fix the cover (2) in the closed position with little play with respect to the wall (4),
- and the cover (2) is held in the closed position at least substantially without any prestress with respect to the opening (3).

2. Device according to Claim 1, **characterized in that** a smaller force is required for the assembly of the cover (2) than for the disassembly.

3. Device according to either of Claims 1 and 2, **characterized in that** the engaging element (10) and the additional engaging element (12) are formed in such a way that, when an opening operation takes place on the cover (2), the engaging element (10) only disengages after or at the same time as the additional engaging element (12).

4. Device according to one of Claims 1 to 3, **characterized in that** the first periphery (6) has a number of retaining hooks (9), which are preferably arranged at the same distances from one another.

5. Device according to one of Claims 1 to 4, **characterized in that** the cover (2) additionally has on its inner side (8) at least one centring element (14), which interacts with the opening (3) and/or with at least one centring counter element (15) in the region of the opening (3).

6. Device according to one of Claims 1 to 5, **characterized in that** the cover (2) additionally has a formed-on restraining line (16), which can be captively connected to the wall (4).

7. Device according to Claim 6, **characterized in that** the restraining line (16) has at its end remote from the cover (2) a clip element (17) or a snap element (17), which interacts with a corresponding receptacle (18) on the wall (4), in order to connect the restraining line (16) to the wall (4).

8. Device according to one of Claims 1 to 7, **characterized in that** the engaging element (10) and/or the retaining hook (9) and/or the additional engaging element (12) and/or the centring element (14) and/or the restraining line (16) is/are integrally formed on the cover (2).

9. Device according to one of Claims 1 to 7, **characterized in that** the engaging counter element (11) and/or the additional engaging counter element (13) and/or the centring counter element (15) and/or the receptacle (18) is/are integrally formed on the wall (4) of the plastic moulded part (1).

10. Device according to one of Claims 1 to 9, **characterized in that** the plastic moulded part (1) is formed as a bumper fascia or wing of a motor vehicle.

11. Device according to one of Claims 1 to 10, **characterized in that** the cover (2) and the plastic moulded part (1) have at least one outer layer (19).

12. Device according to Claim 11, **characterized in that** the outer layer has at least one coat of paint and/or at least one washcoat and/or at least one primer coat.

13. Motor vehicle having a device according to one of Claims 1 to 12.

## Revendications

1. Dispositif présentant :
une pièce moulée (1) en matière synthétique, en particulier une pièce de montage et/ou une pièce d'habillage pour véhicule automobile,
un couvercle (2) servant à fermer une ouverture (3) ménagée dans une paroi (4) de la pièce moulée (1) en matière synthétique,
le couvercle (2) inséré dans l'ouverture (3) pouvant prendre une position de fermeture dans laquelle il ferme l'ouverture (3) et une position d'ouverture dans laquelle il peut être enlevé de l'ouverture (3) et/ou inséré dans cette dernière,
le couvercle (2) présentant un contour essentiellement complémentaire de l'ouverture (3) de telle sorte que le couvercle (2) remplit essentiellement l'ouverture (3) en position de fermeture,
le couvercle (2) présentant un premier bord (6) et un deuxième bord (7) situé face au premier bord (6),
le couvercle (2) présentant sur son côté intérieur (8) tourné vers l'ouverture (3), au niveau du premier bord (6), au moins un crochet de retenue (9) qui accroche par l'arrière l'ouverture (3) lorsque le couvercle (2) est en position de fermeture,
le couvercle (2) présentant en outre sur son côté intérieur (8), au niveau du deuxième bord (7), au moins un élément d'encliquetage (10) qui, lorsque le couvercle (2) est en position de fermeture, s'encliquette sur au moins un élément complémentaire (11) d'encliquetage fixé sur la paroi (4),
le couvercle (2) présentant sur son côté intérieur (8), au niveau du premier bord (6), au moins un autre élément supplémentaire d'encliquetage (12) qui coopère avec au moins un élément complémentaire supplémentaire d'encliquetage (13) et prévu sur la paroi (4),
**caractérisé en ce que**
le deuxième bord (7) du couvercle (2) s'appuie sur une surface de pose (22) de la paroi (4) lorsqu'une force de poussée (24) est appliquée sur le côté extérieur (20) du couvercle (2) au niveau du deuxième bord (7),
**en ce que** lorsque le couvercle (2) est en position de fermeture, l'élément complémentaire supplémentaire d'encliquetage (13) sert d'abord de butée (5) pour l'élément supplémentaire d'encliquetage (12) lorsqu'une force de poussée (23) agit sur le côté extérieur (20) au niveau du premier bord (6) du couvercle (2),
**en ce que** l'élément complémentaire supplémentaire d'encliquetage (13) ne se déforme lorsqu'une opération d'ouverture est souhaitée qu'après l'application d'une force suffisante (23) pour que l'élément supplémentaire d'encliquetage (12) se dégage et puisse libérer le couvercle (2) dans sa position d'ouverture ou
**en ce que** l'élément supplémentaire d'encliquetage (12) est configuré de telle sorte que l'élément supplémentaire d'encliquetage (12) ne se déforme que sous l'action d'une force suffisante (23) pour que l'élément supplémentaire d'encliquetage (12) se dégage et puisse libérer le couvercle (2) dans la position d'ouverture,
**en ce que** le crochet de retenue (9), l'élément d'encliquetage (10) et l'élément supplémentaire d'encliquetage (12) sont configurés de manière à fixer ensemble le couvercle (2) avec un petit jeu par rapport à la paroi (4) dans la position de fermeture et **en ce que** dans la position de fermeture, le couvercle (2) est maintenu au moins essentiellement sans précontrainte par rapport à l'ouverture (3).

2. Dispositif selon la revendication 1, **caractérisé en ce que** la force nécessaire pour le montage du couvercle (2) est plus basse que celle nécessaire pour son démontage.

3. Dispositif selon l'une des revendications 1 ou 2, **caractérisé en ce que** l'élément d'encliquetage (10) et l'élément supplémentaire d'encliquetage (12) sont configurés de telle sorte que lors d'une opération d'ouverture du couvercle (2), l'élément d'encliquetage (10) se dégage après ou en même temps que l'élément supplémentaire d'encliquetage (12).

4. Dispositif selon l'une des revendications 1 à 3, **caractérisé en ce que** le premier bord (6) présente plusieurs crochets de retenue (9) disposés de préférence à même distance mutuelle.

5. Dispositif selon l'une des revendications 1 à 4, **caractérisé en ce que** le couvercle (2) présente de plus sur son côté intérieur (8) au moins un élément de centrage (14) qui coopère avec l'ouverture (3) et/ou avec au moins un élément complémentaire de centrage (15) disposé au niveau de l'ouverture (3).

6. Dispositif selon l'une des revendications 1 à 5, **caractérisé en ce que** le couvercle (2) présente de plus un cordon moulé de reprise (16) qui peut être relié à la paroi (4) de manière à ne pas pouvoir s'en dégager.

7. Dispositif selon l'une des revendications 6, **caractérisé en ce que** le cordon de reprise (16) présente sur son extrémité non tournée vers le couvercle (2) un élément d'accrochage (17) ou un élément de pinçage (17) qui coopèrent avec un logement correspondant (18) prévu sur la paroi (4) pour relier le cordon de reprise (16) à la paroi (4).

8. Dispositif selon l'une des revendications 1 à 7, **caractérisé en ce que** l'élément d'encliquetage (10), le crochet de retenue (9), l'élément supplémentaire d'encliquetage (12), l'élément de centrage (14) et/ou le cordon de reprise (16) sont moulés d'un seul tenant sur le couvercle (2).

9. Dispositif selon l'une des revendications 1 à 7, **caractérisé en ce que** l'élément complémentaire d'encliquetage (11), l'élément supplémentaire complémentaire d'encliquetage (13), l'élément complémentaire de centrage (15) et/ou le logement (18) sont formés d'un seul tenant sur la paroi (4) de la pièce moulée (1) en matière synthétique.

10. Dispositif selon l'une des revendications 1 à 9, **caractérisé en ce que** la pièce moulée (1) en matière synthétique est configurée comme habillage d'amortisseur ou gardeboue de véhicule automobile.

11. Dispositif selon l'une des revendications 1 à 10, **caractérisé en ce que** le couvercle (2) et la pièce moulée (1) en matière synthétique présentent au moins une couche de recouvrement (19).

12. Dispositif selon la revendication 11, **caractérisé en ce que** la couche de recouvrement présente au moins une couche de peinture, une couche de fond et/ou au moins une couche de primaire.

13. Véhicule automobile doté d'un dispositif selon l'une des revendications 1 à 12.
